# FASCICULE DE BREVET EUROPEEN

(11) **EP 2 090 480 B1**
(45) Date de publication et mention de la délivrance du brevet: **26.10.2011**
(21) Numéro de dépôt: 09290056.2
(22) Date de dépôt: 27.01.2009
(51) Int. Cl.: B60T 8/17, B60T 13/74, B60T 17/22, B64C 25/24

(54) **Procédé de gestion d'alimentation d'un actionneur irréversible de frein de roue de véhicule**
Verfahren zur Steuerung der Stromversorgung eines irreversiblen Bremsaktuators an einem Fahrzeugrad
Method of managing the power supply of an irreversible vehicle wheel brake actuator

(30) Priorité: 14.02.2008 FR 0800803
(43) Date de publication de la demande: 19.08.2009
(73) Titulaire: Messier-Bugatti-Dowty, 78140 Velizy Villacoublay (FR)
(72) Inventeur: Colin, Emmanuel, 75014 Paris (FR)
(74) Mandataire: Parzy, Benjamin Alain

(56) Documents cités:
- EP-A- 1 498 332
- EP-A- 1 681 220
- WO-A-2007/120267

## Description

L'invention concerne un procédé de gestion d'un actionneur électromécanique irréversible de frein de véhicule, notamment aéronef.

### ARRIERE-PLAN DE L'INVENTION

On connaît des freins de roue pour aéronef comportant un support qui reçoit au moins un actionneur électromécanique équipé d'un poussoir déplaçable en regard d'éléments de friction pour appliquer sélectivement sur ceux-ci un effort de freinage. En général, l'actionneur est réversible et est équipé d'un organe de blocage du poussoir en position de sorte que le poussoir puisse être bloqué alors qu'il exerce un effort sur les éléments de friction.

L'organe de blocage permet d'assurer la fonction de parc, consistant à exercer un effort sur les éléments de friction alors que l'aéronef est à l'arrêt, tout éteint. A cet effet, on commande au moins un actionneur de sorte que son poussoir exerce un effort sur les éléments de friction, on active l'organe de blocage pour bloquer le poussoir en position, et on coupe l'alimentation du moteur de l'actionneur. En pratique, l'organe de blocage est un frein à manque de courant qui laisse libre le poussoir lorsque l'organe de blocage est alimenté, mais qui bloque le poussoir lorsque l'organe de blocage n'est plus alimenté. L'aéronef peut alors être mis hors tension, l'effort de parc étant alors assuré alors même que le moteur de l'actionneur et l'organe de blocage ne sont plus alimentés.

En temps normal, même en l'absence de freinage, l'organe d'actionnement est alimenté de sorte que l'actionneur consomme donc de l'énergie électrique.

Cependant, il existe d'autres situations dans lesquelles l'organe de blocage peut être activé alors même que l'aéronef n'est pas sous tension. En effet, alors qu'en temps normal, l'organe de blocage est alimenté pour laisser le poussoir libre de se déplacer, il est possible, lorsque l'aéronef est à l'arrêt et que le pilote maintient les pédales de frein appuyées pour un temps assez long, que les moteurs des actionneurs s'échauffent inutilement. Il est alors connu, notamment du document FR2880602, de passer automatiquement en mode de parc en activant l'organe de blocage, c'est-à-dire en interrompant son alimentation. Le poussoir de l'actionneur est alors bloqué en position, et l'alimentation du moteur du poussoir peut alors être également coupée. Dans cette situation, l'actionneur ne consomme plus d'énergie, tout en maintenant un effort sur les éléments de friction.

Il est également connu notamment du document EP1681220 d'utiliser un actionneur irréversible comme organe de blocage.

### OBJET DE L'INVENTION

L'invention vise à proposer un nouveau frein à actionneurs électromécaniques permettant de diminuer la consommation d'énergie électrique ainsi que la complexité des actionneurs existants.

### BREVE DESCRIPTION DE L'INVENTION

Selon l'invention, on propose un frein de roue de véhicule, notamment aéronef, comportant un support qui reçoit au moins un actionneur électromécanique équipé d'un poussoir déplaçable en regard d'éléments de friction sous l'action d'un moteur électrique pour appliquer sélectivement sur les éléments de friction un effort de freinage, dans lequel l'actionneur est irréversible de sorte qu'un effort appliqué sur le poussoir ne peut faire tourner le moteur électrique, et dans lequel l'actionneur est commandé de la façon suivante : le moteur de l'actionneur est alimenté en temps normal, et l'alimentation du moteur est coupée lorsque :
- la vitesse mesurée de rotation du moteur descend en dessous d'un premier seuil prédéterminé, et
- la vitesse commandée de rotation du moteur descend en dessous d'un deuxième seuil prédéterminé.

L'asservissement de l'actionneur aussi bien en effort qu'en position nécessite en général la mise en oeuvre d'une boucle interne de rétroaction en vitesse. On profite ainsi de cette boucle pour effectuer des tests sur la vitesse commandée fournie en entrée de la boucle en vitesse, et sur la vitesse mesurée par un capteur de rotation qui équipe par ailleurs le moteur et qui sert à la commande de l'alimentation du moteur. Les tests portent donc sur des paramètres internes de l'asservissement du moteur et peuvent ainsi être effectués indépendamment de la façon (position ou effort) dont l'actionneur est asservi.

Grâce à ces deux tests, on s'assure d'une part qu'aucun mouvement du poussoir n'est désiré, et d'autre part que le poussoir est effectivement arrêté, et on coupe l'alimentation de l'actionneur, de sorte que, du fait de l'irréversibilité de l'actionneur, le poussoir soit bloqué en position.

En cas de survenue d'un ordre de déplacement du poussoir, une vitesse de rotation du moteur est alors commandée de sorte que le signal de vitesse commandée repasse au dessus du seuil associé. Les conditions de coupure de l'alimentation ne sont plus remplies et l'alimentation du moteur électrique de l'actionneur est alors rétablie. En variante, on pourra choisir des conditions de rétablissement de l'alimentation différentes des conditions de coupure de l'alimentation. En particulier, le seuil de vitesse commandée au delà duquel l'alimentation est rétablie peut ne pas être identique au seuil ayant servi à la coupure de l'alimentation.

### BREVE DESCRIPTION DES DESSINS

L'invention sera mieux comprise en référence à l'unique figure qui représente de façon schématique l'asservissement d'un actionneur électromécanique de frein, équipé d'une gestion de l'alimentation selon l'invention.

### DESCRIPTION DETAILLEE DE L'INVENTION

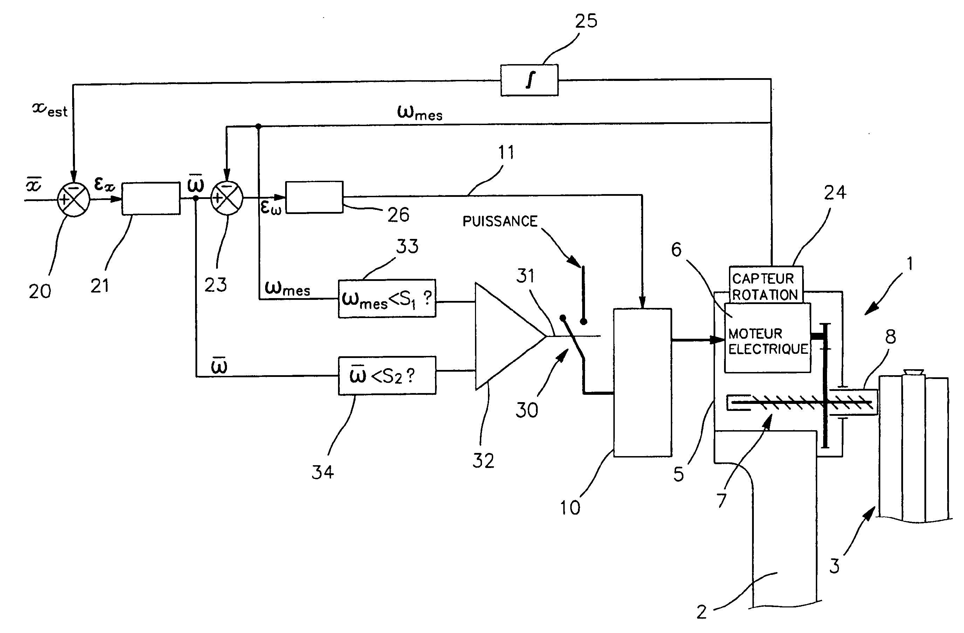

Sur la figure 1 est représenté un actionneur électromécanique 1 qui est monté sur un support 2 qui s'étend en regard d'éléments de friction 3, ici une pile de disques dont des rotors qui tournent avec la roue à freiner disposés en alternance avec des stators qui eux ne tournent pas avec la roue à freiner. L'actionneur 1 comporte un corps 5 dans lequel un moteur électrique 6 est disposé pour entraîner (via un réducteur, comme ici, ou directement) la partie tournante d'une liaison vis/écrou 7 dont la partie non tournante est déplaçable linéairement et forme un poussoir 8 adapté à presser sélectivement la pile de disques 3 en réponse à un ordre de freinage.

Selon l'invention, l'actionneur est du type irréversible, c'est-à-dire qu'un couple généré par le moteur électrique 6 entraîne un déplacement linéaire du poussoir 8, mais un effort de réaction exercé par les disques 3 sur le poussoir 8 ne peut provoquer le déplacement linéaire du poussoir 8 ni la rotation du moteur électrique 6. Pour rendre l'actionneur irréversible, on pourra prévoir un moteur électrique 6 irréversible, par exemple un moteur piézoélectrique à fort couple. On pourra également obtenir cette irréversibilité en utilisant une transmission irréversible entre le moteur électrique 6 et le poussoir 8, par exemple une transmission par vis à rouleaux à faible pas.

On utilisera avantageusement une transmission dont le rendement inverse est faible, sans toutefois être nul, en relation avec un moteur réversible. Ainsi, le poussoir est bloqué pour des efforts de réaction ne dépassant pas un effort limite donné, mais recule pour des efforts de réaction égaux ou supérieur audit effort limite. L'actionneur se comporte alors comme un limiteur d'effort lorsqu'il n'est pas alimenté, en étant irréversible jusqu'à l'effort limite, et réversible au-delà.

L'alimentation du moteur électrique 6 est assurée par un convertisseur 10 qui reçoit la puissance électrique du réseau de puissance de l'aéronef et qui module la puissance électrique fournie au moteur électrique 6 en fonction d'une commande 11 générée en réponse à une consigne de position x̅. Plus précisément, la consigne de position x est fournie en entrée positive d'un comparateur 20 dont l'entrée négative reçoit un signal de position estimée *xₑₛₜ*. La sortie du comparateur 20 est une erreur de position ε*ₓ* qui est fournie à un premier contrôleur 21, pouvant comporter de façon connue en soi un étage PID, des organes de filtrage, de saturation ... La sortie du premier contrôleur 21 est une consigne ω̅ de vitesse de rotation du moteur électrique 6, également appelée vitesse de rotation commandée .

La vitesse de rotation commandée ω̅ est fournie en entrée positive d'un comparateur 23 dont l'entrée négative reçoit un signal de vitesse de rotation mesurée ω*ₘₑₛ* en provenance d'un capteur de rotation 24 disposé sur le moteur électrique 6 pour mesurer directement la vitesse de rotation de celui-ci. On notera que le signal de position estimée *xₑₛₜ* est ici élaboré par un intégrateur 25 à partir de la vitesse de rotation mesurée ω*ₘₑₛ*. La sortie du comparateur 23 est une erreur de vitesse ε_{ω} de rotation qui est fournie à un deuxième contrôleur 26 qui génère la commande 11 à destination du convertisseur 10.

Selon l'invention, le convertisseur 10 est alimenté en puissance au travers d'un interrupteur commandé 30 qui est normalement fermé pour assurer l'alimentation du convertisseur 10, mais qui est ouvert dans les conditions suivantes. La commande 31 de l'interrupteur commandé 30 est la sortie d'une porte ET 32 dont les deux entrées sont respectivement :
- la sortie d'un premier comparateur 33 qui compare la vitesse de rotation mesurée ω*ₘₑₛ* du moteur électrique 6 à un premier seuil S1, cette sortie étant égale à 1 si la vitesse de rotation mesurée est inférieure au premier seuil S1 ;
- la sortie d'un deuxième comparateur 34 qui compare la vitesse de rotation commandée ω̅ du moteur électrique 6 à un deuxième seuil S2, cette sortie étant égale à 1 si la vitesse de rotation commandée est inférieure au premier seuil S2.

Ainsi, l'interrupteur commandé n'est ouvert que si :
- la vitesse de rotation mesurée est inférieure au premier seuil S1 ; et
- la vitesse de rotation commandée est inférieure au premier seuil S2

Dans ces conditions, le convertisseur 10 et donc le moteur électrique 6 ne sont plus alimentés, de sorte que l'actionneur électromécanique 1 est bloqué, du fait de son irréversibilité. Ces conditions correspondent à une situation pour laquelle aucun déplacement du poussoir n'est commandé, et aucun déplacement du poussoir n'est en cours.

Cette coupure d'alimentation permet une économie d'énergie conséquente, puisque l'actionneur n'est plus alimenté lorsqu'il n'est pas sollicité. En outre, l'actionneur ne comporte aucun organe de blocage spécifique, de sorte qu'aucune consommation électrique n'est nécessaire pour maintenir le poussoir libre de se déplacer sous l'action du moteur.

Les tests conduisant à l'interruption de l'alimentation sont ici effectués sur les paramètres de la boucle interne en vitesse. En pratique, les moteurs envisagés pour une telle application comportent un capteur de vitesse de rotation, de sorte que l'information de vitesse de rotation mesurée est déjà disponible. Qui plus est, la vitesse de rotation du moteur fait le plus souvent l'objet d'un asservissement et donc d'une boucle interne de contrôle, ne serait-ce que pour contrôler l'accélération et la décélération du poussoir, ou sa vitesse d'approche lorsqu'il accoste les disques, de sorte que le signal de vitesse commandée est également disponible.

La gestion de l'alimentation de l'actionneur selon l'invention est donc très simple à implémenter sur un actionneur existant, que celui-ci soit asservi en position ou en effort.

De façon connue en soi, les deux comparateurs 33,34 pourront être associés à des confirmateurs dont la sortie ne passe à 1 que si la sortie du comparateur associé est restée à 1 pendant un temps déterminé, par exemple quelques secondes. En variante, on pourra placer un confirmateur entre la porte ET 32 et l'interrupteur commandé 30. Ceci permet de ne pas couper l'alimentation si un déplacement du poussoir est commandé rapidement (dans un temps inférieur au temps de confirmation) après qu'une situation propice à la coupure de l'alimentation a été détectée selon l'invention. Cette disposition évite de fatiguer inutilement les composants électroniques de puissance formant l'interrupteur commandé 30.

En pratique, les seuils S1 et S2 retenus sont avantageusement choisis aussi bas que le permet le bruit polluant les signaux de vitesse commandée et de vitesse mesurée. On pourra bien sûr prévoir des filtrages de ces signaux pour en éliminer le bruit.

L'invention n'est pas limitée aux modes de réalisation qui viennent d'être décrits, mais englobe au contraire toute variante reprenant, avec des moyens équivalents, les caractéristiques essentielles énoncées plus haut.

En particulier, bien que l'on ait indiqué ici que l'alimentation en puissance était coupée ou autorisée au moyen d'un interrupteur de puissance placé sur la ligne d'alimentation du moteur électrique en amont de celui-ci, on pourra mettre en oeuvre d'autres moyens de coupure sélective, comme par exemple une commande qui force sélectivement en position ouverte les interrupteurs d'un l'onduleur alimentant le moteur électrique.

## Revendications

1. Frein de roue de véhicule, notamment aéronef, comportant un support (2) qui reçoit au moins un actionneur électromécanique (1) équipé d'un poussoir (8) déplaçable en regard d'éléments de friction (3) sous l'action d'un moteur électrique (6) pour appliquer sélectivement sur les éléments de friction un effort de freinage, l'actionneur étant irréversible de sorte qu'un effort de réaction appliqué sur le poussoir ne peut faire tourner le moteur électrique au moins lorsque l'effort de réaction est inférieur à un effort limité donné, **caractérisé en ce que** l'actionneur est associé à des moyens de coupure sélective (30, 31, 32, 33, 34) d'une alimentation électrique de puissance du moteur électrique qui, en temps normal, autorisent l'alimentation de l'actionneur, et qui coupent cette alimentation si :
- la vitesse mesurée de rotation (ω*ₘₑₛ*) du moteur électrique descend en dessous d'un premier seuil prédéterminé (S1), et
- la vitesse commandée de rotation (ω̅) du moteur électrique descend en dessous d'un deuxième seuil prédéterminé (S2).

2. Procédé de gestion de l'alimentation électrique de puissance d'un actionneur électromécanique (1) irréversible de frein de roue de véhicule, notamment aéronef, l'actionneur électromécanique étant équipé d'un poussoir (8) déplaçable en regard d'éléments de friction (3) sous l'action d'un moteur électrique (6) pour appliquer sélectivement sur les éléments de friction un effort de freinage, le procédé comportant l'étape de couper une alimentation électrique de puissance de l'actionneur si :
- la vitesse mesurée de rotation (ω*ₘₑₛ*) du moteur descend en dessous d'un premier seuil prédéterminé (S1), et
- la vitesse commandée de rotation (ω̅) du moteur descend en dessous d'un deuxième seuil prédéterminé (S2).

## Claims

1. A wheel brake for a vehicle, in particular for an aircraft, the brake comprising a support (2) that receives at least one electromechanical actuator (1) fitted with a pusher (8) facing friction elements (3) and movable under drive from an electric motor (6) to apply a braking force selectively against the friction elements, the actuator being non-reversible such that a reaction force applied on the pusher cannot cause the electric motor to turn, at least when the reaction force is below a given limit force, the brake being **characterized in that** the actuator is associated with means (30, 31, 32, 33, 34) for selectively switching off an electric power supply to the electric motor, which means allow power to be delivered to the actuator in normal circumstances, and switch off said power if:
the measured speed of rotation (ωₘₑₛ) of the electric motor drops below a first predetermined threshold (S₁) ; and
the commanded speed of rotation (ω̅) of the electric motor drops below a second predetermined threshold (S₂) .

2. A method of managing the electrical power supply to a non-reversible electromechanical actuator (1) for a wheel brake of a vehicle, in particular an aircraft, the electromechanical actuator being fitted with a pusher (8) facing friction elements (3) and movable under drive from an electric motor (6) to apply a braking force selectively to the friction elements, the method including the step of switching off an electrical power supply to the actuator if:
· the measured speed of rotation (ωₘₑₛ) of the motor drops below a first predetermined threshold (S₁); and
· the commanded speed of rotation (ω̅) of the motor drops below a second predetermined threshold (S₂) ·

## Patentansprüche

1. Bremse für ein Rad eines Fahrzeugs, insbesondere eines Flugzeugs, umfassend einen Träger (2), der mindestens einen elektromechanischen Aktuator (1) aufnimmt, der mit einem Stößel (8) versehen ist, der unter der Wirkung eines Elektromotors (6) gegenüber Reibungselementen (3) verschiebbar ist, um auf die Reibungselemente selektiv eine Bremskraft auszuüben, wobei der Aktuator irreversibel ist, sodass eine auf den Stößel ausgeübte Reaktionskraft den Elektromotor zumindest dann nicht antreiben kann, wenn die Reaktionskraft unter einer gegebenen begrenzten Kraft liegt, **dadurch gekennzeichnet, dass** der Aktuator mit Mitteln (30, 31, 32, 33, 34) zur selektiven Unterbrechung einer elektrischen Stromversorgung des Elektromotors verbunden ist, die normalerweise die Versorgung des Aktuators gestatten und die diese Versorgung unterbrechen, wenn:
- die gemessene Drehzahl (ω*ₘₑₛ*) des Elektromotors unter einen ersten vorgegebenen Schwellenwert (S1) fällt, und
- die gesteuerte Drehzahl (ω̅) des Elektromotors unter einen zweiten vorgegebenen Schwellenwert (S2) fällt.

2. Verfahren zum Steuern der elektrischen Stromversorgung eines irreversiblen elektromechanischen Aktuators (1) für eine Bremse eines Rades eines Fahrzeugs, insbesondere eines Flugzeugs, wobei der elektromechanische Aktuator mit einem Stößel (8) versehen ist, der unter der Wirkung eines Elektromotors (6) gegenüber Reibungselementen (3) verschiebbar ist, um auf die Reibungselemente selektiv eine Bremskraft auszuüben, wobei das Verfahren den Schritt des Unterbrechens einer elektrischen Stromversorgung des Aktuators umfasst, wenn:
- die gemessene Drehzahl (ω*ₘₑₛ*) des Motors unter einen ersten vorgegebenen Schwellenwert (S1) fällt, und
- die gesteuerte Drehzahl (ω̅) des Motors unter einen zweiten vorgegebenen Schwellenwert (S2) fällt.
